# EUROPEAN PATENT APPLICATION

(11) **EP 4 557 782 A1**
(43) Date of publication of application: **21.05.2025**
(21) Application number: 23838797.1
(22) Date of filing: 30.06.2023
(51) Int. Cl.: H04W 4/06

(54) **CONNECTION RESUMPTION METHOD AND APPARATUS, AND TERMINAL AND NETWORK-SIDE DEVICE**

(30) Priority: 15.07.2022 CN 202210836819
(71) Applicant: Vivo Mobile Communication Co., Ltd., Dongguan, Guangdong 523863 (CN)
(72) Inventor: LIU, Jiamin, Dongguan, Guangdong 523863 (CN)
(74) Representative: Lavoix
(86) International application number: PCT/CN2023/105413
(87) International publication number: WO 2024/012305

(57) **Abstract**

This application discloses a connection resume method and apparatus, a terminal, and a network-side device, and pertains to the field of communication technologies. The connection resume method provided in the embodiments of this application includes: camping, by a terminal, on a first cell in an inactive state, and receiving a first multicast service; and sending a first message in a case that the terminal meets a preset condition, where the first message is used to request connection resume.

## Description

### CROSS-REFERENCE TO RELATED APPLICATIONS

This application claims priority to Chinese Patent Application No. 202210836819.6, filed in China on July 15, 2022, which is incorporated herein by reference in its entirety.

### TECHNICAL FIELD

This application pertains to the field of communication technologies, and specifically, relates to a connection resume method and apparatus, a terminal, and a network-side device.

### BACKGROUND

Currently, in communication systems, terminals are supported to receive multicast (multicast) services only in a connected state (Connected). As a result, a large number of terminals may remain in the connected state to receive multicast services, leading to large network load.

### SUMMARY

Embodiments of this application provide a connection resume method and apparatus, a terminal, and a network-side device, to resolve the problem of large network load.

According to a first aspect, a connection resume method is provided and includes:
camping, by a terminal, on a first cell in an inactive state, and receiving a first multicast service; and
sending a first message in a case that the terminal meets a preset condition, where the first message is used to request connection resume.

According to a second aspect, a connection resume method is provided and includes:
receiving, by a network-side device, a first message sent by a terminal, where the first message is used to request connection resume; where
the terminal is a terminal that camps on a first cell in an inactive state to receive a first multicast service.

According to a third aspect, a connection resume apparatus is provided and includes:
a first receiving module configured to camp on a first cell in an inactive state, and receive a first multicast service; and
a first sending module configured to send a first message in a case that the terminal meets a preset condition, where the first message is used to request connection resume.

According to a fourth aspect, a connection resume apparatus is provided and includes:
a first receiving module configured to receive a first message sent by a terminal, where the first message is used to request connection resume; where
the terminal is a terminal that camps on a first cell in an inactive state to receive a first multicast service.

According to a fifth aspect, a terminal is provided. The terminal includes a processor and a memory. The memory stores a program or an instruction capable of running on the processor. When the program or instruction is executed by the processor, the steps of the connection resume method according to the embodiments of this application are implemented.

According to a sixth aspect, a terminal is provided and includes a processor and a communication interface. The communication interface is configured to camp on a first cell in an inactive state, and receive a first multicast service; and send a first message in a case that the terminal meets a preset condition, where the first message is used to request connection resume.

According to a seventh aspect, a network-side device is provided and includes a processor and a memory. The memory stores a program or an instruction capable of running on the processor. When the program or instruction is executed by the processor, the steps of the connection resume method according to the embodiments of this application are implemented.

According to an eighth aspect, a network-side device is provided and includes a processor and a communication interface. The communication interface is configured to receive a first message sent by a terminal, where the first message is used to request connection resume. The terminal is a terminal that camps on a first cell in an inactive state to receive a first multicast service.

According to a ninth aspect, a readable storage medium is provided. The readable storage medium stores a program or an instruction, and when the program or instruction is executed by a processor, the steps of the connection resume method provided in the embodiments of this application for the terminal side are implemented, or when the program or instruction is executed by a processor, the steps of the connection resume method provided in the embodiments of this application for the network-side device side are implemented.

According to a tenth aspect, a chip is provided and includes a processor and a communication interface. The communication interface is coupled to the processor. The processor is configured to run a program or an instruction to implement the connection resume method provided by the embodiments of this application for the terminal side, or the processor is configured to run a program or an instruction to implement the connection resume method provided by the embodiments of this application for the network-side device side.

According to an eleventh aspect, a computer program/program product is provided. The computer program/program product is stored in a storage medium. The computer program/program product is executed by at least one processor to implement the steps of the connection resume method provided by the embodiments of this application for the terminal side, or the computer program/program product is executed by at least one processor to implement the steps of the connection resume method provided by the embodiments of this application for the network-side device side.

According to a twelfth aspect, a frequency domain resource determining system is provided and includes a terminal and a network-side device. The terminal can be configured to perform the steps of the connection resume method provided by the embodiments of this application for the terminal side, and the network-side device can be configured to perform the steps of the connection resume method provided by the embodiments of this application for the network-side device side.

In the embodiments of this application, the terminal camps on the first cell in the inactive state and receives the first multicast service; and sends the first message in the case that the terminal meets the preset condition, where the first message is used to request connection resume. This supports the terminal in receiving the multicast service in the inactive state, thereby reducing network load. Additionally, sending the first message can allow for timely request for connection resume in a case that the terminal receives the multicast service in the inactive state, so as to improve the flexibility of terminal state switching.

### BRIEF DESCRIPTION OF DRAWINGS

FIG. 1 is a block diagram of a wireless communication system to which embodiments of this application are applicable;
FIG. 2 is a flowchart of a connection resume method according to an embodiment of this application;
FIG. 3 is a flowchart of another connection resume method according to an embodiment of this application;
FIG. 4 is a structural diagram of a connection resume apparatus according to an embodiment of this application;
FIG. 5 is a structural diagram of another connection resume apparatus according to an embodiment of this application;
FIG. 6 is a structural diagram of a communication device according to an embodiment of this application;
FIG. 7 is a structural diagram of a terminal according to an embodiment of this application; and
FIG. 8 is a structural diagram of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

It should be noted that technologies described in the embodiments of this application are not limited to a long term evolution (Long Term Evolution, LTE) or LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions. However, these technologies may also be applied to other applications than an NR system application, for example, the 6th generation (6th Generation, 6G) communication system.

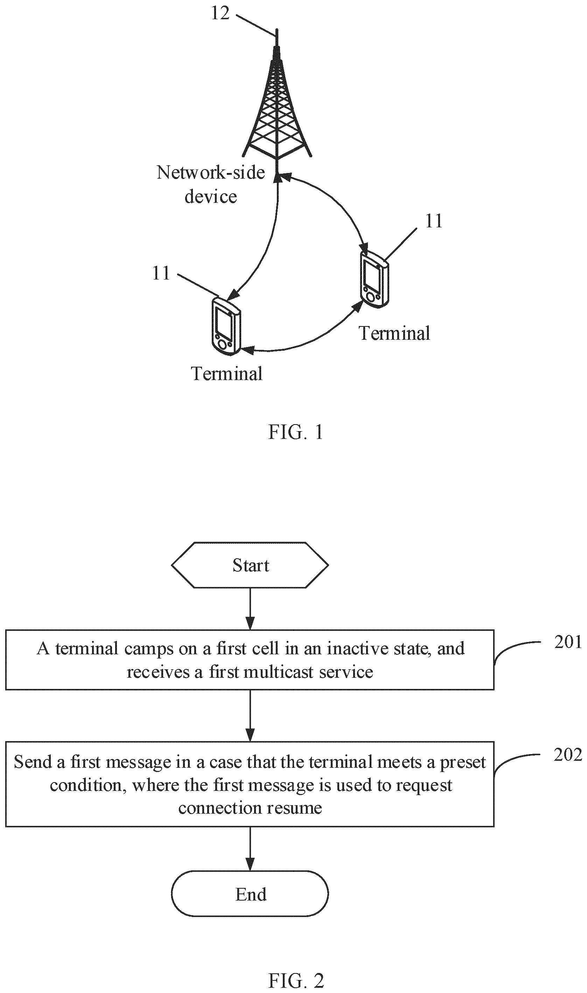

FIG. 1 is a block diagram of a wireless communication system to which embodiments of this application are applicable. The wireless communication system includes a terminal 11 and a network-side device 12. The terminal 11 can be a terminal side device such as a mobile phone, a tablet personal computer (Tablet Personal Computer), a laptop computer (Laptop Computer) or a notebook computer, a personal digital assistant (Personal Digital Assistant, PDA), a handheld computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart home device (a home appliance with wireless communication function, such as s refrigerator, a television set, a washing machine, or a furniture), a game console, a personal computer (personal computer, PC), a teller machine, or a self-service machine. The wearable device includes a smartwatch, a smart band, a smart headphone, smart glasses, smart jewelry (a smart bracelet, a smart wristband, a smart ring, a smart necklace, a smart anklet, a smart ankle bracelet, or the like), a smart wristband, smart clothing, or the like. It should be noted that a specific type of the terminal 11 is not limited in the embodiments of this application. The network-side device 12 can include an access network device or a core network device. The network-side device 12 can also be referred to as a radio access network device, a radio access network (Radio Access Network, RAN), a radio access network function, or a radio access network unit. The network-side device 12 can include a base station, a wireless local area network (Wireless Local Area Network, WLAN) access point, a WiFi node, or the like. The base station can be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmitting receiving point (Transmitting Receiving Point, TRP), or some other appropriate term in the art. As long as the same technical effect is achieved, the base station is not limited to a specific technical term. It should be noted that the base station in the NR system is used only as an example in the embodiments of this application, and a specific type of the base station is not limited. The core network device can include but is not limited to at least one of the following: a core network node, a core network function, a mobility management entity (Mobility Management Entity, MME), an access and management function (Access and Management Function, AMF), a session management function (Session Management Function, SMF), a user plane function (User Plane Function, UPF), a policy control function (Policy Control Function, PCF), policy and charging rule function unit (Policy and Charging Rules Function, PCRF), edge application service discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network storage function (Network Repository Function, NRF), a network open function (Network Exposure Function, NEF), a local NEF (Local NEF, or L-NEF), a binding support function (Binding Support Function, BSF), an application function (Application Function, AF), and the like. It should be noted that in the embodiments of this application, only a core network device in the NR system is used as an example for description, and a specific type of the core network device is not limited.

The connection resume method and apparatus, a terminal, and a network-side device that are provided in the embodiments of this application are hereinafter described in detail through some embodiments and application scenarios thereof with reference to the accompanying drawings.

Referring to FIG. 2, FIG. 2 is a flowchart of a connection resume method according to an embodiment of this application. As shown in FIG. 2, the method includes the following steps.

201. A terminal camps on a first cell in an inactive state, and receives a first multicast service.

The first cell can be a multicast service cell (multicast cell) that sends the first multicast service, or the first cell can be a cell (non-Multicast cell) that does not send the first multicast service, but when the terminal camps on this cell, the terminal can receive the first multicast service.

In this embodiment of this application, the multicast service can be expressed as a multicast/broadcast service (Multicast/Broadcast Service, MBS).

202. Send a first message in a case that the terminal meets a preset condition, where the first message is used to request connection resume.

The preset conditions can be agreed in a protocol, configured by a network side, or determined by the terminal itself.

The first message can be sent in the first cell or in a second cell. For example, the terminal camps on the first cell in the inactive state and receives the first multicast service, and the terminal performs cell reselection to reselect to the second cell, and sends the first message. The first cell can be a multicast cell or a non-multicast cell, such as another cell with the same coverage area as the multicast cell. The same coverage area herein can indicate entire or partial identity.

In this embodiment of this application, the above steps can support the terminal in receiving multicast services in the inactive state. Network load for the terminal in the inactive state is smaller than network load for the terminal in a connected state. Therefore, this embodiment of this application can reduce the network load. Additionally, for the terminal, the complexity and power consumption in the inactive state are also lower than those in the connected state. Therefore, this can also reduce power consumption of the terminal.

Additionally, sending the first message can allow for timely request for connection resume in a case that the terminal receives the multicast service in the inactive state, so as to improve the flexibility of terminal state switching. Moreover, with connection resume requested, an updated multicast configuration, a new cell multicast configuration, and a new multicast transmission mode can be obtained from the network side, and some reception anomalies can be reported. This can ensure that the terminal normally receives multicast services in a timely manner, thereby improving the experience of the terminal and system efficiency while reception effects are ensured.

In an optional embodiment, that the terminal meets a preset condition includes at least one of the following:
the terminal has received a notification message sent from a network side, where the notification message is used to notify that a configuration of the first multicast service has changed;
the terminal has performed cell reselection;
the terminal has performed mobility management;
the terminal is no longer interested in the first multicast service; and
quality for receiving the first multicast service by the terminal matches preset quality, where the preset quality indicates incapability of continuing to receive the first multicast service.

The notification message can include at least one of the following:
paging message, layer 1 (Layer 1, L1) signaling, medium access control (Medium Access Control, MAC) signaling, radio resource control (Radio Resource Control, RRC) message, and common signaling.

In this embodiment of this application, the configuration of the multicast service can include but is not limited to: multicast/broadcast service radio bear (MBS (Multicast/Broadcast Service, MBS) radio bearer, MRB) configuration, time-domain pattern (pattern), frequency-domain resource, dynamic scheduling information, and the like. The time-domain pattern can include configurations such as cycle length, cycle start position, and activation duration within a cycle.

That a configuration of the multicast service has changed can indicate a partial or complete configuration change.

With the notification message, it can be implemented that connection resume is requested in the case that the configuration of the first multicast service has changed, so as to receive the first multicast service in the connected state, or request a new configuration of the first multicast service.

That the terminal has performed cell reselection can mean that the terminal has reselected to another cell.

That the terminal has performed mobility management can mean that the terminal has performed mobility management evaluation.

That the terminal is no longer interested in the first multicast service can mean that the terminal has autonomously determined not to be interested in the first multicast service any more. For example, the terminal is no longer interested in the first multicast service based on terminal implementation. If the terminal requests to enter the inactive state (Inactive) to receive the multicast service to save power, the terminal can request connection resume from a network under a condition that the power level is replenished or the power level is sufficiently high. That is to say, in this embodiment of this application, the request for connection resume can be sent based on terminal implementation.

In this embodiment, connection resume can be initiated for different reasons to enhance the flexibility of receiving multicast services.

In some embodiments, that the terminal has performed cell reselection includes at least one of the following:
the terminal has reselected from the first cell to a second cell, where the first cell is a multicast service cell transmitting the first multicast service; and
the terminal has reselected from a first effective region to a third cell, where the first effective region is an effective region of the first multicast service, and the third cell does not belong to the first effective region.

That the terminal has reselected from the first cell to a second cell can also be understood as follows: the terminal has selected from the first cell to the second cell. In this embodiment, it can be implemented that if the UE has selected/reselected from a current multicast service cell to another cell, connection resume is initiated.

Having reselected to the third cell may be as follows: the terminal has performed selection/reselection to reselect from a current multicast service configuration effective cell to another ineffective cell not in an effective cell list/effective cell area. Therefore, connection resume is initiated.

An embodiment is as follows:

This embodiment mainly describes cell reselection, and the details are as follows:

The terminal reselects from the current multicast cell to another cell, or the terminal reselects from a current multicast configuration effective cell to a cell outside an effective configuration region, meaning that a multicast cell configuration currently stored by the terminal is no longer effective, thus the terminal needs to trigger connection resume and requests a new cell configuration or transmission mode from the network.

The terminal initiates a connection resume request in a new cell. For the initiation manner, reference can be made to other embodiments or implementations, or a different manner may be used to clearly indicate the objective of the connection resume request to the network.

For a new cell on the network side, upon receiving the connection resume request message of the terminal and obtaining ID information of the terminal in the message, at least one of the following manners can be used for subsequent processing:
sending a connection resume command to the terminal to let the terminal enter the connected state; and in a case that the network cannot clearly determine the objective of the connection resume of the terminal or the network finds other subsequent uplink data through indication of the terminal, the network side has other downlink signaling or downlink data to be sent to the terminal, an interested service of the terminal changes, a new cell allows the terminal to receive a multicast service in the connected state, a new cell does not support a multicast service, or the like, allowing the terminal to first enter the connected state for a data transmission or signaling procedure, and sending a new multicast service configuration to the terminal through RRC reconfiguration signaling so that the new cell can keep the terminal in the connected state to continue to receive a service. Alternatively, after the above procedure is completed, the network can send an RRC release (RRC Release) message to the terminal to release it to the inactive state (Inactive) for service reception. Alternatively, since the new cell does not support a multicast service, information and configuration of a cell that supports a multicast service can be sent to the terminal, or a unicast bearer can be established for the terminal to continue to receive a multicast service.

Directly sending the RRC release message that carries the new cell configuration to the terminal is a fastest manner to obtain the new configuration and features the least signaling overheads. In a case that the network can determine or estimate that the terminal initiates connection resume for the multicast service configuration, the network can directly send the new multicast service configuration to the terminal. The new configuration may not be a configuration supported by a current cell, or may be a configuration supported by another cell served by a same intra-base station (intra-gNB). Alternatively, cell ID, frequency information, and the like of another cell may be sent to the terminal, and the terminal is directly released to the inactive state for service reception.

Similarly, for cell reselection, multicast related information may be kept in the terminal context (terminal context). This is for the network side to quickly determine interested-service information of the terminal and current configuration information of the terminal, so as to help the network side to decide whether to send the new cell configuration information to the terminal in various situations. For example, if a cell corresponding to a current multicast service configuration is inconsistent with a multicast cell stored in the terminal context, it indicates that the terminal has moved, and a new configuration needs to be sent to the terminal. In the absence of cell information, the current configuration and the configuration stored in the terminal context can be compared. If they are the same, it indicates that the terminal configuration can continue to be used and there is no need to send a new configuration. Optionally, in the case of unchanged configuration, a sending progress of the current cell can also be sent to the terminal, such as sending packet data convergence protocol (Packet Data Convergence Protocol, PDCP) count (COUNT) information to the terminal, facilitating quick synchronization reception of the terminal. If they are different, it indicates that a new configuration needs to be sent.

In some embodiments, that the terminal has performed mobility management includes at least one of the following resulting from mobility:
the terminal has camped on the first cell and stopped receiving the first multicast service;
a measurement result of the terminal for a reference signal of the first cell matches a first preset measurement result, where the first preset measurement result indicates that the terminal is incapable of continuing to receive the first multicast service in the first cell;
quality for receiving the first multicast service by the terminal matches preset quality, where the preset quality indicates that the terminal is incapable of continuing to receive the first multicast service in the first cell;
a measurement result of the terminal for a multicast channel or a multicast signal matches a second preset measurement result, where the second preset measurement result indicates that the terminal is incapable of continuing to receive the first multicast service in the first cell; and
information of the terminal indicates incapability of continuing to receive the first multicast service.

That the terminal has camped on the first cell and stopped receiving the first multicast service may be as follows: the terminal has camped on the first cell but the terminal needs to stop receiving the first multicast service due to mobility or other reasons. Additionally, stopping receiving the first multicast service may be stopping receiving the first multicast service due to the incapability of receiving the first multicast service any longer.

Values of the first preset measurement result, the preset quality, and the second preset measurement result may be defined in a protocol or configured by the network side.

The measurement results can be measurement results such as reference signal received power (reference signal received power, RSRP), signal-to-noise ratio (Signal-to-Noise Ratio, SNR), and reference signal received quality (Reference Signal Received Quality, RSRQ).

The measurement result matches the first preset measurement result. The first preset measurement result indicating that the terminal is incapable of continuing to receive the first multicast service in the first cell may be as follows: the measurement result is lower than the first preset measurement result, indicating that the terminal may fail to receive the first multicast service if it continues the reception in the first cell. Therefore, the terminal is incapable of continuing to receive the first multicast service.

The measurement result matches the second preset measurement result. The second preset measurement result indicating that the terminal is incapable of continuing to receive the first multicast service in the first cell may be as follows: the measurement result is lower than the second preset measurement result, indicating that the terminal may fail to receive the first multicast service if it continues the reception in the first cell. Therefore, the terminal is incapable of continuing to receive the first multicast service.

The quality of the first multicast service may be quality information such as decoding failure rate, decoding success rate, block error rate, number of data blocks that experience consecutive decoding failure, or reception failure probability within a certain duration.

The quality matches the preset quality, where the preset quality indicating that the terminal is incapable of continuing to receive the first multicast service in the first cell may be as follows: the decoding failure rate is higher than a preset value, indicating incapability of continuing to receive the first multicast service, or the decoding success rate is lower than a preset value, indicating incapability of continuing to receive the first multicast service. It should be noted that the preset value may be different for different reception parameters.

That information of the terminal indicates incapability of continuing to receive the first multicast service may be determining, based on terminal implementation information, the incapability of continuing to receive the first multicast service. For example, the terminal estimates that the reception quality information does not meet a requirement, or power information of the terminal does not meet a requirement.

It should be noted that in some embodiments, at least one of the above cases not caused by mobility can also trigger the terminal to send the first message.

In some embodiments, that quality for receiving the first multicast service by the terminal matches preset quality includes at least one of the following:
the terminal has consecutively failed to receive data of the first multicast service for N1 times;
the terminal has failed to receive data of the first multicast service for N2 times within a first time window;
a failure ratio of the terminal in receiving data of the first multicast service is higher than or equal to a first preset ratio within a second time window;
the terminal has not correctly received the first multicast service within a first duration;
the terminal has correctly received the first multicast service for less than N3 times within a third time window;
a ratio of the terminal in correctly receiving the first multicast service is lower than a second preset ratio within a fourth time window;
the terminal has not correctly received the first multicast service within N4 consecutive discontinuous reception (Discontinuous Reception, DRX) cycles;
the terminal has failed to receive data of the first multicast service for N6 times within N5 consecutive DRX cycles;
a failure ratio of the terminal in receiving data of the first multicast service is higher than or equal to a third preset ratio within N7 consecutive DRX cycles;
the terminal has correctly received the first multicast service for less than N9 times within N8 consecutive DRX cycles;
a ratio of the terminal in correctly receiving the first multicast service is lower than a fourth preset ratio within N10 consecutive DRX cycles; and
quality for receiving the first multicast service by the terminal does not meet a preset requirement; where
N1 to N10 are positive integers.

N1 to N10 are defined in a protocol, configured by the network side, or determined by the terminal.

The time window, duration, preset ratio, and preset requirement are defined in a protocol, configured by the network side, or determined by the terminal.

The failure to receive data of the first multicast service may be failing to receive a data block of the first multicast service, where data block failure can be reflected by physical downlink shared channel (Physical downlink shared channel, PDSCH) decoding failure.

In some embodiments, the first time window may not be configured. For example, as long as the terminal has failed to receive data of the multicast service for N2 times, the first message is sent.

Additionally, for as in "for ... times" can be understood as greater than or equal to. For example, the terminal has failed to receive the data of the first multicast service for N2 times or more.

In this embodiment, it can be determined from multiple dimensions whether the first multicast service can continue to be received in the first cell. It should be noted that the receiving the first multicast service in the first cell means that the terminal camps on the first cell, but the first multicast service can be sent by the first cell or another cell.

An embodiment is as follows:

This embodiment mainly describes mobility, and the details are as follows:

Mobility is similar to cell reselection described in the above embodiment to some extent. Triggering and determining of cell reselection follow the mobility rules for terminal in idle state (Idle state) defined by a protocol. However, multicast service reception has particularities. The terminal may not camp on a multicast cell but can receive a multicast service in the multicast cell, similar to the multi-reception capability which is camping on one cell but receiving multicast services in another cell. In the camping cell, protocol-defined mobility rules for the idle state, such as cell selection and reselection, are followed in the camping cell, while in a receiving multicast cell, another set of rules can be used to determine whether reception can be continued.

In this case, the terminal to receive a multicast service triggers a connection resume process in at least one of the following cases because it determines that original multicast cell reception cannot be continued:
RSRP of a current multicast service cell of the terminal is below a threshold. For example, RSRP of a common reference signal is below the threshold;
the terminal can no longer receive a multicast service from a current multicast service cell;
quality of receiving a multicast service by the terminal from the current multicast service cell is so poor that it meets a certain condition, such as at least one of the following:
   consecutively failing to receive a multicast service data block for N1 times;
   within window T1, failing to receive multicast service data for N2 times or a ratio of failing to receive multicast service data being higher than a certain ratio;
   not correctly receiving the multicast service for a duration T2;
   within window T3, correctly receiving multicast service data for less than N3 times or a ratio of correctly receiving multicast service data being lower than a certain ratio;
   not correctly receiving the multicast service for consecutive N4 DRX cycles (DRX cycle);
   within consecutive N5 DRX cycles, failing to receive multicast service data for N6 times or a ratio of failing to receive multicast service data being higher than a certain ratio;
   within consecutive N7 DRX cycles, correctly receiving multicast service data for less than N3 times, or a ratio of correctly receiving multicast service data being lower than a certain ratio; and
   reception quality not meeting a requirement, for example, the block error rate not meeting a quality of service (Quality of Service, QoS) indicator or being higher than a threshold; or for another example, reference RSRP of path loss being lower than a threshold;
   a measurement performed by the terminal on a multicast signal from a current multicast service cell meets a certain threshold, such as multicast RSRP is lower than a threshold; and
   other cases based on terminal implementation. For example, in a case that the terminal itself evaluates that the reception quality does not meet a requirement, a report can be initiated to the network.

After meeting the above condition, the terminal initiates an RRC resume request (RRC Resume Request) process from the current camping cell. This process can be similar to other embodiments, and the terminal can try to carry its objective information in the connection resume request process.

For a new cell on the network side, upon receiving the connection resume request message of the terminal and obtaining ID information of the terminal, the corresponding part in the cell reselection embodiment can be used for subsequent processing.

Similarly, for cell change, multicast related information can also be kept in the terminal context. This is for the network side to quickly determine interested-service information of the terminal and current configuration information of the terminal, so as to help the network side to decide whether to send the new cell configuration information to the terminal in various situations. For example, if a cell corresponding to a current multicast service configuration is inconsistent with a multicast cell stored in the terminal context, it indicates that the terminal has moved, and a new configuration needs to be sent to the terminal. In the absence of cell information, the current configuration and the configuration stored in the terminal context can be compared. If they are the same, it indicates that the terminal configuration can continue to be used and there is no need to send a new configuration. Optionally, in the case of unchanged configuration, a sending progress (for example, PDCP COUNT information) of the current cell can also be sent to the terminal, facilitating quick synchronization reception of the terminal. If they are different, it indicates that a new configuration needs to be sent.

In some embodiments, that the terminal is no longer interested in the first multicast service includes: the terminal is no longer interested in the first multicast service not due to mobility or cell reselection; and/or
that quality for receiving the first multicast service by the terminal matches preset quality includes: the quality for receiving the first multicast service by the terminal matches preset quality not due to mobility or cell reselection.

That the terminal is no longer interested in the first multicast service not due to mobility or cell reselection may be as follows: in the absence of mobility or cell change, in a case that a home or camping cell of the terminal remains unchanged, some situation changes still occur, causing the terminal to be no longer interested in the first multicast service, thus reporting to or interacting with the network.

That quality for receiving the first multicast service by the terminal matches preset quality not due to mobility or cell reselection may be as follows: in the absence of mobility or cell change, in a case that a home or camping cell of the terminal remains unchanged, some situation changes still occur, causing a change in the quality of the first multicast service, thus making the quality of the first multicast service match the preset quality.

In this embodiment, connection resume can be initiated not due to mobility or cell reselection, to improve the flexibility of the terminal in receiving multicast services.

An embodiment is as follows:
This embodiment mainly describes poor reception quality or disinterest of the terminal, and the details are as follows:

In this embodiment, in the absence of mobility or cell change, in a case that a home or camping cell of the terminal remains unchanged, some situation changes still occur, so that the terminal needs to report to or interact with the network.

In this case, the terminal to receive a multicast service triggers a connection resume process in at least one of the following cases because it determines that original multicast cell reception is abnormal or has changed:
the terminal can no longer receive a multicast service from a current multicast service cell;
the terminal is no longer interested in a multicast service;
quality of receiving a multicast service by the terminal from the current multicast service cell is so poor that it meets a certain condition, for example:
   consecutively failing to receive a multicast service data block for N1 times;
   within window T1, failing to receive multicast service data for N2 times or a ratio of failing to receive multicast service data being higher than a certain ratio;
   not correctly receiving the multicast service for a duration T2;
   within window T3, correctly receiving multicast service data for less than N3 times or a ratio of correctly receiving multicast service data being lower than a certain ratio;
   not correctly receiving the multicast service for consecutive N4 DRX cycles;
   within consecutive N5 DRX cycles, failing to receive multicast service data for N6 times or a ratio of failing to receive multicast service data being higher than a certain ratio;
   within consecutive N6 DRX cycles, correctly receiving multicast service data for less than N3 times, or a ratio of correctly receiving multicast service data being lower than a certain ratio; and
   reception quality not meeting a requirement. For example, a block error rate does not meet a QoS indicator or is higher than a threshold;
   a measurement performed by the terminal on a multicast signal from a current multicast service cell meets a certain threshold, for example, multicast RSRP is lower than a threshold; and
   other cases based on terminal implementation. For example,
   if the terminal requests to enter the inactive state to receive the multicast service to save power, the terminal can report to the network under a condition that the power level is replenished or the power level is sufficiently high.

In a case that the terminal itself evaluates that the reception quality does not meet a requirement, a report can be initiated to the network.

In a case that the above situations occur, the terminal can immediately initiate the RRC connection resume request, so as to interact with and report to the network side. In such a case, the objective of the terminal is not solely to obtain the updated configuration to continue to receive the multicast service. Therefore, in this case, the terminal may not carry additional information in the connection resume request, with the objective being to enter the connected state.

After the terminal enters the RRC connected (RRC Connected) state through a normal connection resume request and a connection resume process sent by the network side, the terminal can perform at least one of the following:
requesting, by the terminal, the network to receive a multicast service in the connected state;
reporting, by the terminal, its multicast reception information to the network, such as triggered indicators and measurement results, so as to help the network side to provide a reasonable solution;
initiating, by the terminal, a multicast service exiting process (opposite process of joining, which indicates that the terminal is no longer interested in the multicast service) to a core network, where the exiting information of the terminal is subsequently notified by a core network node to a serving base station, the serving base station can then deconfigures the multicast service configuration of the terminal, and in a case that the terminal has no other service transmission needs, the terminal can be released back to the idle state; and
requesting and reporting, by the terminal, to the network side so that the network performs a reasonable action, such as keeping a terminal with a poor link in the connected state, for example, a point-to-point leg (point-to-point leg, PTP leg) for enhancing and ensuring the transmission effects.

In an optional embodiment, the first message is further used to indicate at least one of the following:
an objective of requesting connection resume; and
the terminal having uplink data to send.

The first message can explicitly or implicitly indicate at least one of the above.

The objective of requesting connection resume can be obtaining a new multicast service configuration or quickly entering the connected state.

In this embodiment, since the first message is further used to indicate at least one of the following, the network-side device can quickly respond to the content indicated by the first message to meet the communication need of the terminal.

In some embodiments, signaling content carried in the first message is used to indicate at least one of the following:
an objective of requesting connection resume; and
the terminal having uplink data to send;
   or
a message header of the first message is used to indicate at least one of the following:
   an objective of requesting connection resume; and
   the terminal having uplink data to send.

The signaling content carried in the first message indicating at least one of the above may be as follows: indication information indicating at least one of the above can be included in the signaling content.

The message header of the first message is used to indicate at least one of the above, with the signaling content carried in the first message remaining different, and indication information indicating at least one of the above is carried in the message header of the first message. For example, if the first message is RRC signaling, the RRC signaling content remains unchanged, but information indicating at least one of the above is added to other layer 2 headers (L2 header) of the RRC signaling. For example, information indicating at least one of the above is added to a medium access control header (MAC header), a radio link control header (Radio Link Control header, RLC header), a packet data convergence protocol header (PDCP header), or the like.

In this embodiment, at least one of the above can be indicated through the signaling content or message header, thereby improving the flexibility of the message format.

In an optional embodiment, the first message is sent along with a buffer status report (Buffer Status Report, BSR).

That the first message is sent along with a BSR may be that the first message and the BSR are sent simultaneously.

In this way, it can be implemented that the BSR is reported while connection resume is requested, so the network-side device can determine, based on the presence of the BSR, whether to issue an uplink resource grant for the terminal to transmit uplink data, or directly release the terminal in a manner of carrying updated configuration information in release signaling (release signaling). This enables timely determining of the requirement of the terminal and improves the timeliness and efficiency of data transmission of the terminal.

In an optional embodiment, after the sending a first message, the method further includes one of the following:
receiving, by the terminal, a connection resume (RRC Resume) message; and
receiving, by the terminal, an RRC release message, where the RRC release message carries a changed configuration of the first multicast service.

The connection resume message and RRC release message can be sent by the network side based on the connection resume request of the terminal, together with the terminal context information, so as to determine whether to send the connection resume to the terminal or directly carry the new multicast service configuration information in the release message. The terminal context information stores multicast cell information of the terminal and/or version information of the multicast configuration obtained by the terminal, helping the network side to determine whether the latest configuration needs to be sent to the terminal.

In this embodiment, it can be implemented that the terminal enters the connected state or obtains the changed configuration in a timely manner.

In some embodiments, after the receiving, by the terminal, an RRC release message, the method further includes:
receiving, by the terminal, the first multicast service in the inactive state based on the changed configuration of the first multicast service.

In this embodiment, it can be implemented that the terminal receives the first multicast service in the inactive state based on the changed configuration in a timely manner, thereby improving the effect of the terminal in receiving a multicast service.

In some embodiments, the receiving, by the terminal, the first multicast service in the inactive state based on the changed configuration of the first multicast service includes at least one of the following:
resetting, by the terminal, an RLC layer and a lower layer based on the changed configuration of the first multicast service, and receiving the first multicast service by using a new protocol stack; and
performing, by the terminal, continuous reception of the first multicast service at a PDCP layer based on the changed configuration of the first multicast service.

The resetting an RLC layer and a lower layer, and receiving the first multicast service by using a new protocol stack may be as follows: resetting the RLC layer and the lower layer, and receiving the first multicast service in an initial state of the new protocol stack.

The performing continuous reception of the first multicast service at a PDCP layer may include one of the following:
sorting data packets of the first multicast service at the PDCP layer by at least one of sequence numbers (Sequence Number, SN) and count values (COUNT value) of the data packets based on an explicit indication of a network side; and
sorting data packets of the first multicast service at the PDCP layer by at least one of sequence numbers SNs and count values of the data packets based on an implicit indication of a network side.

The explicit indication of the network side can directly indicate to a PDCP entity that SN/COUNT values of data packets of the PDCP entity can continue to be sorted before and after reconfiguration.

The implicit indication of the network side can be as follows: if a multicast/broadcast service (Multicast/Broadcast Service, MBS) radio bearer corresponding to a PDCP entity satisfies one-to-one mapping of quality of service flows (QoS flow) and MRBs, or all to one (all to one) mapping, it can be considered that PDCP SN/COUNT value synchronization among different base stations can be performed for the MRB. Therefore, the SN/COUNT values of the data packets can continue to be sorted before and after reconfiguration. Otherwise, the PDCP entity is re-established, and sorting before and after reconfiguration is not required.

In some embodiments, after the terminal enters a connected state, the method further includes at least one of the following:
sending, by the terminal, a second message to a network-side device, where the second message is used to request to receive the first multicast service in the connected state;
reporting, by the terminal, reception quality information of the terminal on the first multicast service to the network-side device; and
initiating, by the terminal, an exiting process of the first multicast service.

In this embodiment, the first multicast service can be quickly received in the connected state through the second message.

The reception quality information can be quality information such as decoding failure rate, decoding success rate, block error rate, number of data blocks that experience consecutive decoding failure, reception failure probability within a certain duration, or measurement result.

The reception quality information allows the network-side device to provide a reasonable solution, such as performing variable configuration or letting the terminal enter the connected state to receive a multicast service in a case of poor reception quality.

An embodiment is as follows:
This embodiment mainly describes multicast configuration changes, and the details are as follows:

In a multicast cell, in a case that the multicast service configuration is changed due to a situation change, the terminal needs to be notified. After receiving the notification, the terminal can immediately request connection resume from the network.

In sending the connection resume request, the terminal can adopt at least one of the following manners to more clearly indicate the objective of the connection resume:
carrying information in the connection resume request message to indicate that the objective of the terminal is to update the multicast service configuration;
in a case that the terminal has other uplink data to send at this time, a BSR can be triggered and sent along with the connection resume request message in a case that they can be accommodated by an uplink resource;
in a case that the terminal has other uplink data to send at this time, but an uplink resource cannot accommodate a BSR, carrying, in other manners that do not increase overheads, information indicating that there is subsequent data, for example, by using an R field in a MAC subheader (MAC subheader) or a special logical channel identity (Logical Channel Identity, LCID) field for differentiation; and
sending only the connection resume request message depending on uplink resources.

For the network side, upon receiving the connection resume request message of the terminal and obtaining ID information of the terminal, at least one of the following manners can be used for subsequent processing:
sending a connection resume command to the terminal to let the terminal enter the connected state; and in a case that the network cannot clearly determine the objective of the connection resume of the terminal or the network finds other subsequent uplink data through indication of the terminal, the network side has other downlink signaling or downlink data to be sent to the terminal, an interested service of the terminal changes, or the like, allowing the terminal to first enter the connected state for a data transmission or signaling procedure, and sending a new multicast service configuration to the terminal through RRC reconfiguration signaling. After the above procedure is completed, the network can send an RRC release message to the terminal to release it to the inactive state for service reception.

Directly sending the RRC release message that carries the new updated configuration to the terminal is a fastest manner to obtain the new configuration and features the least signaling overheads. In a case that the network can determine or estimate that the terminal initiates connection resume for multicast service configuration update, the network can directly send the updated multicast service configuration to the terminal, and directly release the terminal to the inactive state for service reception.

Particularly, for an inactive terminal, if it needs to continue to receive a multicast service in the inactive state, a terminal context can save at least one of the following records:
identifier of a multicast service that the terminal is interested in or receiving, such as temporary mobile group identity (Temporary Mobile Group Identity, TMGI);
configuration of a multicast service that the terminal is interested in or receiving, such as group-radio network temporary identity (Group-Radio Network Temporary Identity, G-RNTI), DRX configuration, MRB configuration, or radio link control bearer (RLC bearer) configuration;
home cell or effective region information of a multicast service that the terminal is currently receiving, such as cell identity, public land mobile network (Public Land Mobile Network, PLMN) identity, or effective region information; and
configuration version information of a multicast service that the terminal is currently receiving, such as the current configuration version being 0.

The objective of keeping the foregoing information can be allowing the network side to determine interested-service information of the terminal and current configuration information as quickly as possible, so as to help the network side to decide whether to send the configuration update information to the terminal in various situations. For example, if cell configuration version information sent for a current multicast service does not match version information stored in the terminal context, it indicates that the configuration of the terminal has not been updated in time, and a new configuration needs to be sent to the terminal. In the absence of version information, the current configuration and the configuration stored in the terminal context can be compared. If they are the same, it indicates that the configuration of the terminal is the latest version and does not need to be updated. If they are different, it indicates that an updated configuration needs to be sent.

After the terminal receives the new configuration, generally for RLC and lower layers, resetting may be performed to start reception from the initial state of the new protocol stack. For a PDCP layer, due to its important functions such as service continuity and resorting, the continuity requirement needs to be met to a maximum extent. There can be an implicit or explicit continuity operation indication. The explicit indication directly specifies that SN/COUNT values of PDCP data packets can continue to be sorted before and after reconfiguration. In the implicit indication, for example, if an MRB corresponding to a PDCP entity satisfies one-to-one mapping of QoS flows and MRBs, or all to one mapping, it can be considered that PDCP SN/COUNT value synchronization among different base stations can be performed for the MRB. Therefore, the SN/COUNT values of the data packets can continue to be sorted before and after reconfiguration. Otherwise, the PDCP entity is re-established, and sorting before and after reconfiguration is not required.

In the embodiments of this application, the terminal camps on the first cell in the inactive state and receives the first multicast service; and sends the first message in the case that the terminal meets the preset condition, where the first message is used to request connection resume. This supports the terminal in receiving the multicast service in the inactive state, thereby reducing network load. Additionally, sending the first message can allow for timely request for connection resume in a case that the terminal receives the multicast service in the inactive state, so as to improve the flexibility of terminal state switching.

Moreover, in this embodiment of this application, the terminal can also perform connection resume in a timely manner, obtain an updated multicast configuration, a new cell multicast configuration, and a new multicast transmission mode from the network side, and report some reception anomalies. This ensures that the terminal normally receives multicast services in a timely manner, thereby improving the experience of the terminal and system efficiency while reception effects are ensured.

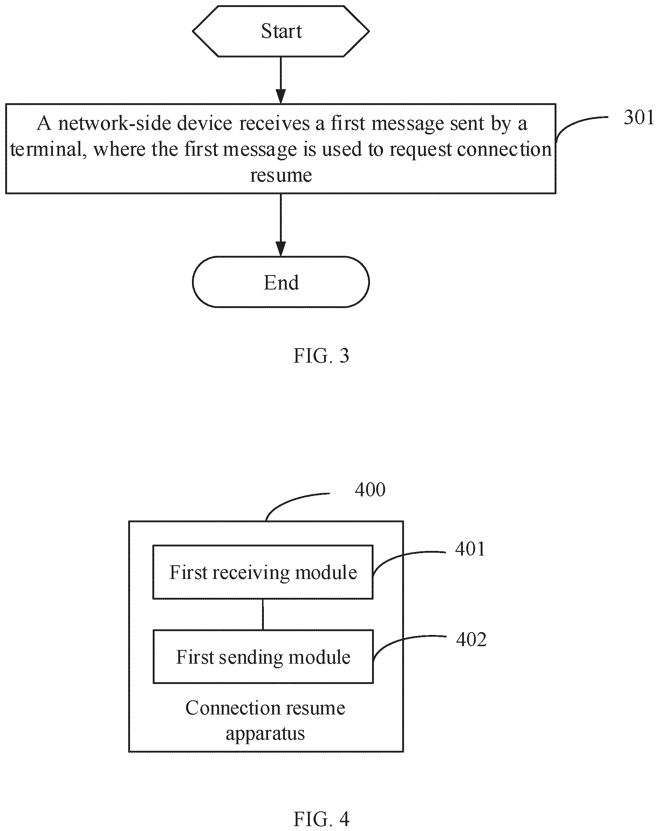

Referring to FIG. 3, FIG. 3 is a flowchart of another connection resume method according to an embodiment of this application. As shown in FIG. 3, the method includes the following steps.

301. A network-side device receives a first message sent by a terminal, where the first message is used to request connection resume.

The terminal is a terminal that camps on a first cell in an inactive state to receive a first multicast service.

Optionally, before the receiving, by a network-side device, a first message sent by a terminal, the method further includes:
sending, by the network-side device, a notification message to the terminal, where the notification message is used to notify that a configuration of the first multicast service has changed.

Optionally, the first message is further used to indicate at least one of the following:
an objective of requesting connection resume; and
the terminal having uplink data to send.

Optionally, signaling content carried in the first message is used to indicate at least one of the following:
an objective of requesting connection resume; and
the terminal having uplink data to send;
   or
a message header of the first message is used to indicate at least one of the following:
   an objective of requesting connection resume; and
   the terminal having uplink data to send.

Optionally, the first message is received along with a buffer status report BSR.

Optionally, after the receiving, by a network-side device, a first message sent by a terminal, the method further includes one of the following:
sending, by the network-side device, a connection resume message to the terminal; and
sending, by the network-side device, a radio resource control RRC release message to the terminal, where the RRC release message carries a changed configuration of the first multicast service.

Optionally, in a case of having determined that the terminal needs to continue to receive the first multicast service in the inactive state, the network-side device sends the RRC release message to the terminal.

Optionally, the network-side device determines, based on a terminal context of the terminal, that the terminal needs to continue to receive the first multicast service in the inactive state, where the terminal context includes at least one of the following:
service identification information of a multicast service that the terminal is interested in or is receiving;
configuration information of a multicast service that the terminal is interested in or is receiving;
home cell information of a multicast service that the terminal is interested in or is receiving; and
effective region information of a multicast service that the terminal is interested in or is receiving.

Optionally, the configuration information includes at least one of the following:
configuration, and configuration version information.

Optionally, after the sending, by the network-side device, a connection resume message to the terminal, the method further includes at least one of the following:
receiving, by the network-side device, a second message sent by the terminal, where the second message is used to request to receive the first multicast service in a connected state;
receiving, by the network-side device, reception quality information of the terminal on the first multicast service reported by the terminal; and
accepting, by the network-side device, an exiting process of the first multicast service initiated by the terminal.

It should be noted that this embodiment is a network-side device implementation corresponding to the embodiment shown in FIG. 2. For a specific implementation of this embodiment, refer to related descriptions of the embodiment shown in FIG. 2. To avoid repetition, details are not described in this embodiment again.

Referring to FIG. 4, FIG. 4 is a structural diagram of a connection resume apparatus according to an embodiment of this application. As shown in FIG. 4, the connection resume apparatus 400 includes:
a first receiving module 401 configured to camp on a first cell in an inactive state, and receive a first multicast service; and
a first sending module 402 configured to send a first message in a case that the terminal meets a preset condition, where the first message is used to request connection resume.

Optionally, that the terminal meets a preset condition includes at least one of the following:
the terminal has received a notification message sent from a network side, where the notification message is used to notify that a configuration of the first multicast service has changed;
the terminal has performed cell reselection;
the terminal has performed mobility management;
the terminal is no longer interested in the first multicast service; and
quality for receiving the first multicast service by the terminal matches preset quality, where the preset quality indicates incapability of continuing to receive the first multicast service.

Optionally, that the terminal has performed cell reselection includes at least one of the following:
the terminal has reselected from the first cell to a second cell, where the first cell is a multicast service cell transmitting the first multicast service; and
the terminal has reselected from a first effective region to a third cell, where the first effective region is an effective region of the first multicast service, and the third cell does not belong to the first effective region.

Optionally, that the terminal has performed mobility management includes at least one of the following resulting from mobility:
the terminal has camped on the first cell and stopped receiving the first multicast service;
a measurement result of the terminal for a reference signal of the first cell matches a first preset measurement result, where the first preset measurement result indicates that the terminal is incapable of continuing to receive the first multicast service in the first cell;
quality for receiving the first multicast service by the terminal matches preset quality, where the preset quality indicates that the terminal is incapable of continuing to receive the first multicast service in the first cell;
a measurement result of the terminal for a multicast channel or a multicast signal matches a second preset measurement result, where the second preset measurement result indicates that the terminal is incapable of continuing to receive the first multicast service in the first cell; and
information of the terminal indicates incapability of continuing to receive the first multicast service.

Optionally, that quality for receiving the first multicast service by the terminal matches preset quality includes at least one of the following:
the terminal has consecutively failed to receive data of the first multicast service for N1 times;
the terminal has failed to receive data of the first multicast service for N2 times within a first time window;
a failure ratio of the terminal in receiving data of the first multicast service is higher than or equal to a first preset ratio within a second time window;
the terminal has not correctly received the first multicast service within a first duration;
the terminal has correctly received the first multicast service for less than N3 times within a third time window;
a ratio of the terminal in correctly receiving the first multicast service is lower than a second preset ratio within a fourth time window;
the terminal has not correctly received the first multicast service within N4 consecutive discontinuous reception DRX cycles;
the terminal has failed to receive data of the first multicast service for N6 times within N5 consecutive DRX cycles;
a failure ratio of the terminal in receiving data of the first multicast service is higher than or equal to a third preset ratio within N7 consecutive DRX cycles;
the terminal has correctly received the first multicast service for less than N9 times within N8 consecutive DRX cycles;
a ratio of the terminal in correctly receiving the first multicast service is lower than a fourth preset ratio within N10 consecutive DRX cycles; and
quality for receiving the first multicast service by the terminal does not meet a preset requirement; where
N1 to N10 are positive integers.

Optionally, that the terminal is no longer interested in the first multicast service includes: the terminal is no longer interested in the first multicast service not due to mobility or cell reselection; and/or
that quality for receiving the first multicast service by the terminal matches preset quality includes: the quality for receiving the first multicast service by the terminal matches preset quality not due to mobility or cell reselection.

Optionally, the first message is further used to indicate at least one of the following:
an objective of requesting connection resume; and
the terminal having uplink data to send.

Optionally, signaling content carried in the first message is used to indicate at least one of the following:
an objective of requesting connection resume; and
the terminal having uplink data to send;
   or
a message header of the first message is used to indicate at least one of the following:
   an objective of requesting connection resume; and
   the terminal having uplink data to send.

Optionally, the first message is sent along with a buffer status report BSR.

Optionally, the apparatus further includes one of the following:
a second receiving module configured to receive a connection resume message; and
a third receiving module configured to receive a radio resource control RRC release message, where the RRC release message carries a changed configuration of the first multicast service.

Optionally, the apparatus further includes:
a fourth receiving module configured to receive the first multicast service in the inactive state based on the changed configuration of the first multicast service.

Optionally, the fourth receiving module is configured to perform at least one of the following:
resetting a radio link control RLC layer and a lower layer based on the changed configuration of the first multicast service, and receiving the first multicast service by using a new protocol stack; and
performing continuous reception of the first multicast service at a packet data convergence protocol PDCP layer based on the changed configuration of the first multicast service.

Optionally, the performing continuous reception of the first multicast service at a PDCP layer includes one of the following:
sorting data packets of the first multicast service at the PDCP layer by at least one of sequence numbers SNs and count values of the data packets based on an explicit indication of a network side; and
sorting data packets of the first multicast service at the PDCP layer by at least one of sequence numbers SNs and count values of the data packets based on an implicit indication of a network side.

Optionally, the apparatus further includes at least one of the following:
a second sending module used by the terminal to send a second message to a network-side device, where the second message is used to request to receive the first multicast service in the connected state;
a third sending module configured to report reception quality information of the terminal on the first multicast service to the network-side device; and
a fourth sending module configured to initiate an exiting process of the first multicast service.

The above connection resume apparatus can reduce the network load.

The connection resume apparatus in this embodiment of this application can be an electronic device, such as an electronic device with an operating system, or a component in an electronic device, such as an integrated circuit or chip. The electronic device can be a terminal or another device other than the terminal. For example, the terminal can include but is not limited to the types of terminals listed in the embodiments of this application, and may be other devices such as servers or network attached storages (Network Attached Storage, NAS). This is not specifically limited in the embodiments of this application.

The connection resume apparatus provided in this embodiment of this application can implement the processes of the method embodiment shown in FIG. 2, with the same technical effects achieved. To avoid repetition, details are not described herein again.

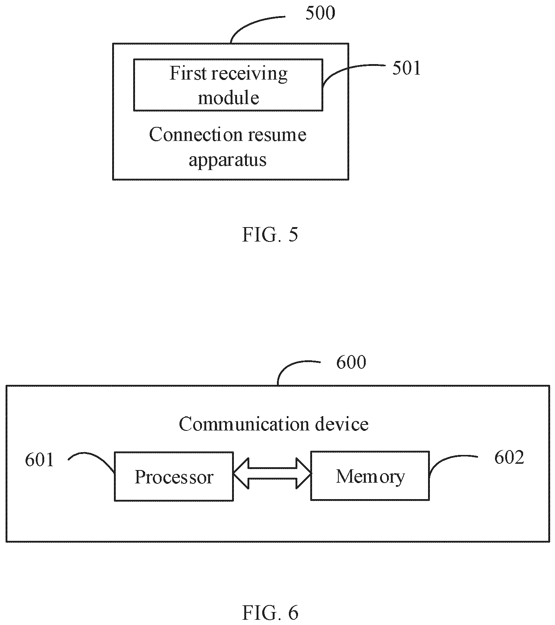

Referring to FIG. 5, FIG. 5 is a structural diagram of another connection resume apparatus according to an embodiment of this application. As shown in FIG. 5, the connection resume apparatus 500 includes:
a first receiving module 501 configured to receive a first message sent by a terminal, where the first message is used to request connection resume; where
the terminal is a terminal that camps on a first cell in an inactive state to receive a first multicast service.

Optionally, the apparatus further includes:
a first sending module configured to send a notification message to the terminal, where the notification message is used to notify that a configuration of the first multicast service has changed.

Optionally, the first message is further used to indicate at least one of the following:
an objective of requesting connection resume; and
the terminal having uplink data to send.

Optionally, signaling content carried in the first message is used to indicate at least one of the following:
an objective of requesting connection resume; and
the terminal having uplink data to send;
   or
a message header of the first message is used to indicate at least one of the following:
   an objective of requesting connection resume; and
   the terminal having uplink data to send.

Optionally, the first message is received along with a buffer status report BSR.

Optionally, the apparatus further includes one of the following:
a second sending module configured to send a connection resume message to the terminal; and
a third sending module configured to send a radio resource control RRC release message to the terminal, where the RRC release message carries a changed configuration of the first multicast service.

Optionally, in a case of having determined that the terminal needs to continue to receive the first multicast service in the inactive state, the network-side device sends the RRC release message to the terminal.

Optionally, the network-side device determines, based on a terminal context of the terminal, that the terminal needs to continue to receive the first multicast service in the inactive state, where the terminal context includes at least one of the following:
service identification information of a multicast service that the terminal is interested in or is receiving;
configuration information of a multicast service that the terminal is interested in or is receiving;
home cell information of a multicast service that the terminal is interested in or is receiving; and
effective region information of a multicast service that the terminal is interested in or is receiving.

Optionally, the configuration information includes at least one of the following:
configuration, and configuration version information.

Optionally, the apparatus further includes at least one of the following:
a second receiving module configured to receive a second message sent by the terminal, where the second message is used to request to receive the first multicast service in the connected state;
a third receiving module configured to receive reception quality information of the terminal on the first multicast service reported by the terminal; and
an accepting module configured to accept an exiting process of the first multicast service initiated by the terminal.

The above multicast service reception apparatus can reduce the network load.

The connection resume apparatus in this embodiment of this application can be an electronic device, such as an electronic device with an operating system, or a component in an electronic device, such as an integrated circuit or chip. The electronic device can be a network-side device.

The connection resume apparatus provided in this embodiment of this application can implement the processes of the method embodiment shown in FIG. 3, with the same technical effects achieved. To avoid repetition, details are not described herein again.

Optionally, as shown in FIG. 6, an embodiment of this application further provides a communication device 600 including a processor 601 and a memory 602. The memory 602 stores a program or an instruction capable of running on the processor 601. For example, in a case that the communication device 600 is a terminal, when the program or instruction is executed by the processor 601, the steps of the foregoing embodiments of the connection resume method on the terminal side are implemented, with the same technical effects achieved. In a case that the communication device 600 is a network-side device, when the program or instruction is executed by the processor 601, the steps of the foregoing embodiments of the connection resume method on the network-side device side, with the same technical effects achieved. To avoid repetition, details are not described herein again.

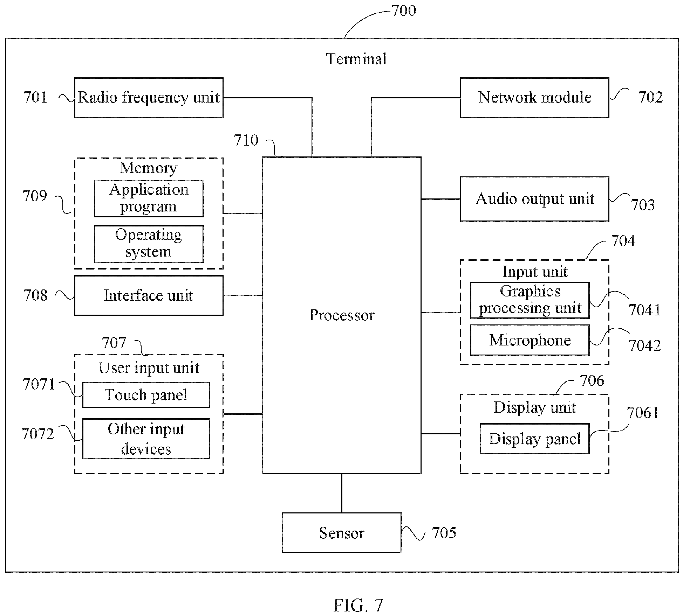

An embodiment of this application further provides a terminal including a processor and a communication interface. The communication interface is configured to camp on a first cell in an inactive state, and receive a first multicast service; and send a first message in a case that the terminal meets a preset condition, where the first message is used to request connection resume. This terminal embodiment corresponds to the foregoing method embodiment executed by the terminal side. The implementation processes and implementation manners of the above method embodiment are applicable to this terminal embodiment, with the same technical effects achieved. Specifically, FIG. 7 is a schematic diagram of a hardware structure of a terminal according to an embodiment of this application.

The terminal 700 includes but is not limited to at least some components such as a radio frequency unit 701, a network module 702, an audio output unit 703, an input unit 704, a sensor 705, a display unit 706, a user input unit 707, an interface unit 708, a memory 709, and a processor 710.

Persons skilled in the art can understand that the terminal 700 may further include a power supply (for example, battery) for supplying power to the components. The power supply may be logically connected to the processor 710 through a power management system. In this way, functions such as charge management, discharge management, and power consumption management are implemented by using the power management system. The structure of the terminal shown in FIG. 7 does not constitute any limitation on the terminal. The terminal may include more or fewer components than shown in the figure, or a combination of some components, or the components disposed differently. Details are not described herein.

It can be understood that in this embodiment of this application, the input unit 704 may include a graphics processing unit (Graphics Processing Unit, GPU) 7041 and a microphone 7042. The graphics processing unit 7041 processes image data of a still picture or video obtained by an image capture apparatus (such as a camera) in a video capture mode or an image capture mode. The display unit 706 may include a display panel 7061, and the display panel 7061 may be configured in a form of a liquid crystal display, an organic light-emitting diode, and the like. The user input unit 707 includes at least one of a touch panel 7071 and other input devices 7072. The touch panel 7071 is also referred to as a touchscreen. The touch panel 7071 may include two parts: a touch detection apparatus and a touch controller. The other input devices 7072 may include but are not limited to a physical keyboard, a function key (such as a volume control key or a power on/off key), a trackball, a mouse, a joystick, and the like. Details are not described herein.

In this embodiment of this application, after receiving downlink data from a network-side device, the radio frequency unit 701 can transmit it to the processor 710 for processing. Additionally, the radio frequency unit 701 can send uplink data to the network-side device. Usually, the radio frequency unit 701 includes but is not limited to an antenna, an amplifier, a transceiver, a coupler, a low-noise amplifier, a duplexer, and so on.

The memory 709 may be configured to store software programs or instructions and various data. The memory 709 can mainly include a first storage area for storing a program or an instruction and a second storage area for storing data. The first storage area can store an operating system, an application program or instruction required by at least one function (for example, a sound play function or an image play function), and the like. Additionally, the memory 709 can include volatile memory or non-volatile memory, or the memory 709 can include both volatile and non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory can be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct Rambus random access memory (Direct Rambus RAM, DRRAM). The memory 709 in this embodiment of this application includes but is not limited to these and any other suitable types of memories.

The processor 710 may include one or more processing units. Optionally, the processor 710 may integrate an application processor and a modem processor. The application processor mainly processes operations related to an operating system, a user interface, an application program, and the like. The modem processor mainly processes a wireless communication signal, for example, a baseband processor. It can be understood that the modem processor can alternatively be not integrated in the processor 710.

The radio frequency unit 701 is configured to camp on a first cell in an inactive state and receive a first multicast service; and send a first message in the case that the terminal meets a preset condition, where the first message is used to request connection resume.

Optionally, that the terminal meets a preset condition includes at least one of the following:
the terminal has received a notification message sent from a network side, where the notification message is used to notify that a configuration of the first multicast service has changed;
the terminal has performed cell reselection;
the terminal has performed mobility management;
the terminal is no longer interested in the first multicast service; and
quality for receiving the first multicast service by the terminal matches preset quality, where the preset quality indicates incapability of continuing to receive the first multicast service.

Optionally, that the terminal has performed cell reselection includes at least one of the following:
the terminal has reselected from the first cell to a second cell, where the first cell is a multicast service cell transmitting the first multicast service; and
the terminal has reselected from a first effective region to a third cell, where the first effective region is an effective region of the first multicast service, and the third cell does not belong to the first effective region.

Optionally, that the terminal has performed mobility management includes at least one of the following resulting from mobility:
the terminal has camped on the first cell and stopped receiving the first multicast service;
a measurement result of the terminal for a reference signal of the first cell matches a first preset measurement result, where the first preset measurement result indicates that the terminal is incapable of continuing to receive the first multicast service in the first cell;
quality for receiving the first multicast service by the terminal matches preset quality, where the preset quality indicates that the terminal is incapable of continuing to receive the first multicast service in the first cell;
a measurement result of the terminal for a multicast channel or a multicast signal matches a second preset measurement result, where the second preset measurement result indicates that the terminal is incapable of continuing to receive the first multicast service in the first cell; and
information of the terminal indicates incapability of continuing to receive the first multicast service.

Optionally, that quality for receiving the first multicast service by the terminal matches preset quality includes at least one of the following:
the terminal has consecutively failed to receive data of the first multicast service for N1 times;
the terminal has failed to receive data of the first multicast service for N2 times within a first time window;
a failure ratio of the terminal in receiving data of the first multicast service is higher than or equal to a first preset ratio within a second time window;
the terminal has not correctly received the first multicast service within a first duration;
the terminal has correctly received the first multicast service for less than N3 times within a third time window;
a ratio of the terminal in correctly receiving the first multicast service is lower than a second preset ratio within a fourth time window;
the terminal has not correctly received the first multicast service within N4 consecutive discontinuous reception DRX cycles;
the terminal has failed to receive data of the first multicast service for N6 times within N5 consecutive DRX cycles;
a failure ratio of the terminal in receiving data of the first multicast service is higher than or equal to a third preset ratio within N7 consecutive DRX cycles;
the terminal has correctly received the first multicast service for less than N9 times within N8 consecutive DRX cycles;
a ratio of the terminal in correctly receiving the first multicast service is lower than a fourth preset ratio within N10 consecutive DRX cycles; and
quality for receiving the first multicast service by the terminal does not meet a preset requirement; where
N1 to N10 are positive integers.

Optionally, that the terminal is no longer interested in the first multicast service includes: the terminal is no longer interested in the first multicast service not due to mobility or cell reselection; and/or
that quality for receiving the first multicast service by the terminal matches preset quality includes: the quality for receiving the first multicast service by the terminal matches preset quality not due to mobility or cell reselection.

Optionally, the first message is further used to indicate at least one of the following:
an objective of requesting connection resume; and
the terminal having uplink data to send.

Optionally, signaling content carried in the first message is used to indicate at least one of the following:
an objective of requesting connection resume; and
the terminal having uplink data to send;
   or
a message header of the first message is used to indicate at least one of the following:
   an objective of requesting connection resume; and
   the terminal having uplink data to send.

Optionally, the first message is sent along with a buffer status report BSR.

Optionally, after sending the first message, the radio frequency unit 701 is further configured to perform one of the following:
receiving a connection resume message; and
receiving a radio resource control RRC release message, where the RRC release message carries a changed configuration of the first multicast service.

Optionally, after the terminal receives the RRC release message, the radio frequency unit 701 is further configured to:
Receive the first multicast service in the inactive state based on the changed configuration of the first multicast service.

Optionally, the terminal receives the first multicast service in the inactive state based on the changed configuration of the first multicast service, and the radio frequency unit 701 is further configured to perform at least one of the following:
resetting a radio link control RLC layer and a lower layer based on the changed configuration of the first multicast service, and receiving the first multicast service by using a new protocol stack; and
performing continuous reception of the first multicast service at a packet data convergence protocol PDCP layer based on the changed configuration of the first multicast service.

Optionally, the performing continuous reception of the first multicast service at a PDCP layer includes one of the following:
sorting data packets of the first multicast service at the PDCP layer by at least one of sequence numbers SNs and count values of the data packets based on an explicit indication of a network side; and
sorting data packets of the first multicast service at the PDCP layer by at least one of sequence numbers SNs and count values of the data packets based on an implicit indication of a network side.

Optionally, after the terminal enters the connected state, the radio frequency unit 701 is further configured to perform at least one of the following:
sending a second message to a network-side device, where the second message is used to request to receive the first multicast service in the connected state;
reporting reception quality information of the terminal on the first multicast service to the network-side device; and
initiating an exiting process of the first multicast service.

The terminal can reduce the network load.

An embodiment of this application further provides a network-side device including a processor and a communication interface. The communication interface is configured to receive a first message sent by a terminal, where the first message is used to request connection resume. The terminal is a terminal that camps on a first cell in an inactive state to receive a first multicast service. This network-side device embodiment corresponds to the foregoing method embodiment executed by the network-side device side. The implementation processes and implementation manners of the above method embodiment are applicable to this network-side device embodiment, with the same technical effects achieved.

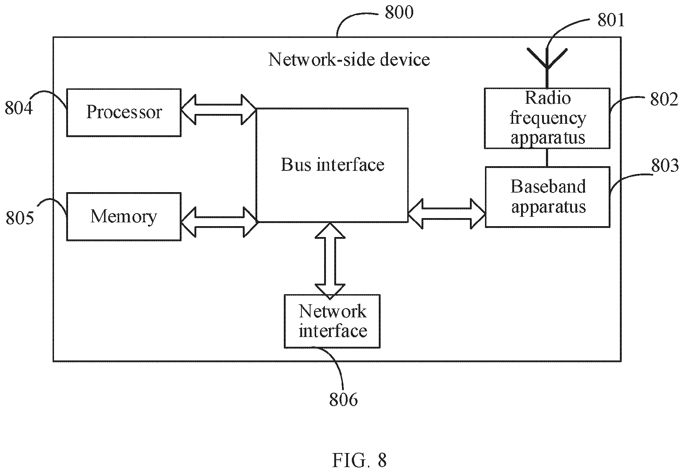

Specifically, an embodiment of this application further provides a network-side device. As shown in FIG. 8, the network-side device 800 includes an antenna 801, a radio frequency apparatus 802, a baseband apparatus 803, a processor 804, and a memory 805. The antenna 801 is connected to the radio frequency apparatus 802. In an uplink direction, the radio frequency apparatus 802 receives information by using the antenna 801, and sends the received information to the baseband apparatus 803 for processing. In a downlink direction, the baseband apparatus 803 processes to-be-sent information, and sends the information to the radio frequency apparatus 802; and the radio frequency apparatus 802 processes the received information and then sends the information by using the antenna 801.

The method performed by the network-side device in the foregoing embodiment may be implemented in the baseband apparatus 803, and the baseband apparatus 803 includes a baseband processor.

The baseband apparatus 803 may include, for example, at least one baseband processing unit, where a plurality of chips are disposed on the baseband processing unit. As shown in FIG. 8, one of the chips is, for example, the baseband processor, and connected to the memory 805 via a bus interface, to invoke the program in the memory 805 to perform the operations of the network-side device shown in the foregoing method embodiment.

The network-side device can further include a network interface 806, and the interface is, for example, a common public radio interface (common public radio interface, CPRI).

Specifically, the network-side device 800 in this embodiment of the present invention further includes: an instruction or a program stored in the memory 805 and capable of running on the processor 804. The processor 804 invokes the instruction or program in the memory 805 to execute the method executed by the modules shown in FIG. 5, with the same technical effects achieved. To avoid repetition, details are not described herein again.

The radio frequency apparatus 802 is used by a network-side device to receive a first message sent by a terminal, where the first message is used to request connection resume; where
the terminal is a terminal that camps on a first cell in an inactive state to receive a first multicast service.

Optionally, before the network-side device receives the first message sent by the terminal, the radio frequency apparatus 802 is further configured to:
send a notification message to the terminal, where the notification message is used to notify that a configuration of the first multicast service has changed.

Optionally, the first message is further used to indicate at least one of the following:
an objective of requesting connection resume; and
the terminal having uplink data to send.

Optionally, signaling content carried in the first message is used to indicate at least one of the following:
an objective of requesting connection resume; and
the terminal having uplink data to send;
   or
a message header of the first message is used to indicate at least one of the following:
   an objective of requesting connection resume; and
   the terminal having uplink data to send.

Optionally, the first message is received along with a buffer status report BSR.

Optionally, after the network-side device receives the first message sent by the terminal, the radio frequency apparatus 802 is further configured to perform one of the following:
sending a connection resume message to the terminal; and
sending a radio resource control RRC release message to the terminal, where the RRC release message carries a changed configuration of the first multicast service.

Optionally, in a case of having determined that the terminal needs to continue to receive the first multicast service in the inactive state, the network-side device sends the RRC release message to the terminal.

Optionally, the network-side device determines, based on a terminal context of the terminal, that the terminal needs to continue to receive the first multicast service in the inactive state, where the terminal context includes at least one of the following:
service identification information of a multicast service that the terminal is interested in or is receiving;
configuration information of a multicast service that the terminal is interested in or is receiving;
home cell information of a multicast service that the terminal is interested in or is receiving; and
effective region information of a multicast service that the terminal is interested in or is receiving.

Optionally, the configuration information includes at least one of the following:
configuration, and configuration version information.

Optionally, after the network-side device sends the connection resume message to the terminal, the radio frequency apparatus 802 is further configured to perform at least one of the following:
receiving a second message sent by the terminal, where the second message is used to request to receive the first multicast service in the connected state;
receiving reception quality information of the terminal on the first multicast service reported by the terminal; and
accepting an exiting process of the first multicast service initiated by the terminal.

The above network-side device can reduce network load.

An embodiment of this application further provides a readable storage medium. The readable storage medium stores a program or an instruction, and when the program or instruction is executed by a processor, the steps of the connection resume method provided in this embodiment of this application are implemented.

The processor is the processor in the terminal in the foregoing embodiments. The readable storage medium includes a computer-readable storage medium such as a computer read-only memory ROM, a random access memory RAM, a magnetic disk, or an optical disc.

An embodiment of this application further provides a chip. The chip includes a processor and a communication interface, the communication interface is coupled to the processor, and the processor is configured to run a program or an instruction to implement the processes of the foregoing embodiments of the connection resume method, with the same technical effects achieved. To avoid repetition, details are not described herein again.

It should be understood that the chip mentioned in this embodiment of this application may also be referred to as a system-on-chip, a system chip, a system-on-a-chip, or a system on a chip, or the like.

An embodiment of this application further provides a computer program/program product. The computer program/program product is stored in a storage medium, and the computer program/program product is executed by at least one processor to implement the processes of the foregoing embodiments of the connection resume method, with the same technical effects achieved. To avoid repetition, details are not described herein again.

An embodiment of this application further provides a frequency domain resource determining system including a terminal and a network-side device. The terminal can be configured to perform the steps of the connection resume method provided by the embodiments of this application for the terminal side, and the network-side device can be configured to perform the steps of the connection resume method provided by the embodiments of this application for the network-side device side.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

By means of the foregoing description of the embodiments, persons skilled in the art may clearly understand that the method in the foregoing embodiment may be implemented by software with a necessary general hardware platform. Certainly, the method in the foregoing embodiment may also be implemented by hardware. However, in many cases, the former is a preferred embodiment. Based on such an understanding, the technical solutions of this application essentially or the part contributing to the prior art may be implemented in a form of a computer software product. The computer software product may be stored in a storage medium (for example, a ROM/RAM, a magnetic disk, or an optical disc), and includes several instructions for instructing a terminal (which may be a mobile phone, a computer, a server, an air conditioner, a network device, or the like) to perform the method described in each embodiment of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A connection resume method, comprising:
camping, by a terminal, on a first cell in an inactive state, and receiving a first multicast service; and
sending a first message in a case that the terminal meets a preset condition, wherein the first message is used to request connection resume.

2. The method according to claim 1, wherein that the terminal meets a preset condition comprises at least one of the following:
the terminal has received a notification message sent from a network side, wherein the notification message is used to notify that a configuration of the first multicast service has changed;
the terminal has performed cell reselection;
the terminal has performed mobility management;
the terminal is no longer interested in the first multicast service; and
quality for receiving the first multicast service by the terminal matches preset quality, wherein the preset quality indicates incapability of continuing to receive the first multicast service.

3. The method according to claim 2, wherein that the terminal has performed cell reselection comprises at least one of the following:
the terminal has reselected from the first cell to a second cell, wherein the first cell is a multicast service cell transmitting the first multicast service; and
the terminal has reselected from a first effective region to a third cell, wherein the first effective region is an effective region of the first multicast service, and the third cell does not belong to the first effective region.

4. The method according to claim 2, wherein that the terminal has performed mobility management comprises at least one of the following resulting from mobility:
the terminal has camped on the first cell and stopped receiving the first multicast service;
a measurement result of the terminal for a reference signal of the first cell matches a first preset measurement result, wherein the first preset measurement result indicates that the terminal is incapable of continuing to receive the first multicast service in the first cell;
quality for receiving the first multicast service by the terminal matches preset quality, wherein the preset quality indicates that the terminal is incapable of continuing to receive the first multicast service in the first cell;
a measurement result of the terminal for a multicast channel or a multicast signal matches a second preset measurement result, wherein the second preset measurement result indicates that the terminal is incapable of continuing to receive the first multicast service in the first cell; and
information of the terminal indicates incapability of continuing to receive the first multicast service.

5. The method according to claim 4, wherein that quality for receiving the first multicast service by the terminal matches preset quality comprises at least one of the following:
the terminal has consecutively failed to receive data of the first multicast service for N1 times;
the terminal has failed to receive data of the first multicast service for N2 times within a first time window;
a failure ratio of the terminal in receiving data of the first multicast service is higher than or equal to a first preset ratio within a second time window;
the terminal has not correctly received the first multicast service within a first duration;
the terminal has correctly received the first multicast service for less than N3 times within a third time window;
a ratio of the terminal in correctly receiving the first multicast service is lower than a second preset ratio within a fourth time window;
the terminal has not correctly received the first multicast service within N4 consecutive discontinuous reception DRX cycles;
the terminal has failed to receive data of the first multicast service for N6 times within N5 consecutive DRX cycles;
a failure ratio of the terminal in receiving data of the first multicast service is higher than or equal to a third preset ratio within N7 consecutive DRX cycles;
the terminal has correctly received the first multicast service for less than N9 times within N8 consecutive DRX cycles;
a ratio of the terminal in correctly receiving the first multicast service is lower than a fourth preset ratio within N10 consecutive DRX cycles; and
quality for receiving the first multicast service by the terminal does not meet a preset requirement; wherein
N1 to N10 are positive integers.

6. The method according to claim 2, wherein that the terminal is no longer interested in the first multicast service comprises: the terminal is no longer interested in the first multicast service not due to mobility or cell reselection; and/or
that quality for receiving the first multicast service by the terminal matches preset quality comprises: the quality for receiving the first multicast service by the terminal matches preset quality not due to mobility or cell reselection.

7. The method according to any of claims 1 to 6, wherein the first message is further used to indicate at least one of the following:
an objective of requesting connection resume; and
the terminal having uplink data to send.

8. The method according to claim 7, wherein signaling content carried in the first message is used to indicate at least one of the following:
an objective of requesting connection resume; and
the terminal having uplink data to send;
or
a message header of the first message is used to indicate at least one of the following:
an objective of requesting connection resume; and
the terminal having uplink data to send.

9. The method according to any of claims 1 to 6, wherein the first message is sent along with a buffer status report BSR.

10. The method according to any of claims 1 to 6, wherein after the sending a first message, the method further comprises one of the following:
receiving, by the terminal, a connection resume message; and
receiving, by the terminal, a radio resource control RRC release message, wherein the RRC release message carries a changed configuration of the first multicast service.

11. The method according to claim 10, wherein after the receiving, by the terminal, an RRC release message, the method further comprises:
receiving, by the terminal, the first multicast service in the inactive state based on the changed configuration of the first multicast service.

12. The method according to claim 11, wherein the receiving, by the terminal, the first multicast service in the inactive state based on the changed configuration of the first multicast service comprises at least one of the following:
resetting, by the terminal, a radio link control RLC layer and a lower layer based on the changed configuration of the first multicast service, and receiving the first multicast service by using a new protocol stack; and
performing, by the terminal, continuous reception of the first multicast service at a packet data convergence protocol PDCP layer based on the changed configuration of the first multicast service.

13. The method according to claim 12, wherein the performing continuous reception of the first multicast service at a PDCP layer comprises one of the following:
sorting data packets of the first multicast service at the PDCP layer by at least one of sequence numbers SNs and count values of the data packets based on an explicit indication of a network side; and
sorting data packets of the first multicast service at the PDCP layer by at least one of sequence numbers SNs and count values of the data packets based on an implicit indication of a network side.

14. The method according to claim 10, wherein after the terminal enters a connected state, the method further comprises at least one of the following:
sending, by the terminal, a second message to a network-side device, wherein the second message is used to request to receive the first multicast service in the connected state;
reporting, by the terminal, reception quality information of the terminal on the first multicast service to the network-side device; and
initiating, by the terminal, an exiting process of the first multicast service.

15. A connection resume method, comprising:
receiving, by a network-side device, a first message sent by a terminal, wherein the first message is used to request connection resume; wherein
the terminal is a terminal that camps on a first cell in an inactive state to receive a first multicast service.

16. The method according to claim 15, wherein before the receiving, by a network-side device, a first message sent by a terminal, the method further comprises:
sending, by the network-side device, a notification message to the terminal, wherein the notification message is used to notify that a configuration of the first multicast service has changed.

17. The method according to claim 15 or 16, wherein the first message is further used to indicate at least one of the following:
an objective of requesting connection resume; and
the terminal having uplink data to send.

18. The method according to claim 17, wherein signaling content carried in the first message is used to indicate at least one of the following:
an objective of requesting connection resume; and
the terminal having uplink data to send;
or
a message header of the first message is used to indicate at least one of the following:
an objective of requesting connection resume; and
the terminal having uplink data to send.

19. The method according to claim 15 or 16, wherein the first message is received along with a buffer status report BSR.

20. The method according to claim 15 or 16, wherein after the receiving, by a network-side device, a first message sent by a terminal, the method further comprises one of the following:
sending, by the network-side device, a connection resume message to the terminal; and
sending, by the network-side device, a radio resource control RRC release message to the terminal, wherein the RRC release message carries a changed configuration of the first multicast service.

21. The method according to claim 20, wherein in a case of having determined that the terminal needs to continue to receive the first multicast service in the inactive state, the network-side device sends the RRC release message to the terminal.

22. The method according to claim 21, wherein the network-side device determines, based on a terminal context of the terminal, that the terminal needs to continue to receive the first multicast service in the inactive state, wherein the terminal context comprises at least one of the following:
service identification information of a multicast service that the terminal is interested in or is receiving;
configuration information of a multicast service that the terminal is interested in or is receiving;
home cell information of a multicast service that the terminal is interested in or is receiving; and
effective region information of a multicast service that the terminal is interested in or is receiving.

23. The method according to claim 22, wherein the configuration information comprises at least one of the following:
configuration, and configuration version information.

24. The method according to claim 20, wherein after the sending, by the network-side device, a connection resume message to the terminal, the method further comprises at least one of the following:
receiving, by the network-side device, a second message sent by the terminal, wherein the second message is used to request to receive the first multicast service in a connected state;
receiving, by the network-side device, reception quality information of the terminal on the first multicast service reported by the terminal; and
accepting, by the network-side device, an exiting process of the first multicast service initiated by the terminal.

25. A connection resume apparatus, comprising:
a first receiving module configured to camp on a first cell in an inactive state, and receive a first multicast service; and
a first sending module configured to send a first message in a case that the terminal meets a preset condition, wherein the first message is used to request connection resume.

26. A connection resume apparatus, comprising:
a first receiving module configured to receive a first message sent by a terminal, wherein the first message is used to request connection resume; wherein
the terminal is a terminal that camps on a first cell in an inactive state to receive a first multicast service.

27. A terminal comprising a processor and a memory, wherein the memory stores a program or an instruction capable of running on the processor, and when the program or instruction is executed by the processor, the steps of the connection resume method according to any one of claims 1 to 14 are implemented.

28. A network-side device comprising a processor and a memory, wherein the memory stores a program or an instruction capable of running on the processor, and when the program or instruction is executed by the processor, the steps of the connection resume method according to any one of claims 15 to 24 are implemented.

29. A readable storage medium, wherein the readable storage medium stores a program or an instruction, and when the program or instruction is executed by a processor, the steps of the connection resume method according to any one of claims 1 to 14 are implemented, or when the program or instruction is executed by a processor, the steps of the connection resume method according to any one of claims 15 to 24 are implemented.
